# EUROPÄISCHE PATENTSCHRIFT

(11) **EP 1 572 480 B1**
(45) Veröffentlichungstag und Bekanntmachung des Hinweises auf die Patenterteilung: **28.06.2006**
(21) Anmeldenummer: 03789256.9
(22) Anmeldetag: 12.12.2003
(51) Int. Cl.: B60J 7/12

(54) **ECKSPRIEGEL FÜR EIN FAHRZEUG MIT FALTVERDECK**
SPRING BOW FOR A VEHICLE WITH A FOLDING ROOF
ARCEAU DE COIN POUR UN VEHICULE AVEC CAPOTE

(30) Priorität: 19.12.2002 DE 10259482
(43) Veröffentlichungstag der Anmeldung: 14.09.2005
(73) Patentinhaber: Bayerische Motoren Werke Aktiengesellschaft, 80809 München (DE)
(72) Erfinder: BOGENSCHUETZ, Raimund, 72406 Bisingen (DE); SPÖCKNER, Ludwig, 84094 Elsendorf (DE); WEGGE, Martin, 80937 München (DE)
(86) Internationale Anmeldenummer: PCT/EP2003/014173
(87) Internationale Veröffentlichungsnummer: WO 2004/056597

(56) Entgegenhaltungen:
- EP-A- 1 184 218
- DE-A- 10 029 471
- DE-C- 19 515 541
- GB-A- 370 305
- GB-A- 836 677

## Beschreibung

Die Erfindung betrifft einen Eckspriegel für ein Fahrzeug mit Faltverdeck, mit den im Oberbegriff des Patentanspruches 1 angegebenen Merkmalen.

Ein derartiger Eckspriegel weist gemäß Figur 2 der DE 100 29 471 A1 einen von der Fahrzeugquerachse etwa radial weg gerichteten Hebelarm auf, an dem ein Lenker des Verdeckgestänges gelenkig angreift, der zur Steuerung der Schwenkbewegung des Eckspriegels beim Verstellen des Faltverdecks von einer Schließlage in eine Offenlage und umgekehrt vorgesehen sein dürfte. Eine derartige Steuerung des Eckspriegels ist aufwändig und verteuert das Faltverdeck. Der Hebelarm am Eckspriegel und der daran angelenkte Lenker schränken den Fahrgastraum und bei geöffnetem Faltverdeck den hinteren Gepäckraum ein. Ein gattungsgemäßer Eckspriegel ist aus der DE-19515541 bekannt.

Der Erfindung liegt die Aufgabe zu Grunde, einen Eckspriegel mit den Merkmalen im Oberbegriff des Patentanspruches 1 anzugeben, der in der Schließlage des Faltverdecks den Fahrgastraum weniger einschränkt und beim Verstellen des Faltverdecks in eine hintere Aufbewahrungslage kompakt zusammenfaltbar ist.

Diese Aufgabe ist durch die im Patentanspruch 1 angegebenen Merkmale gelöst. Vorteilhafte Ausgestaltungen der Erfindung sind den Unteransprüchen entnehmbar.

Der Anschlag am Eckspriegel und der Gegenanschlag am Verdecklenker oder Gestängeelement können so angeordnet werden, dass sie in der Schließlage aneinander anliegen und dadurch eine vorgegebene Winkellage zueinander einnehmen. In der Offenlage des Faltverdecks, kann der Eckspriegel durch die Spannkraft eines mit dem Eckspriegel verbundenen Spanngurtes oder des Verdeckstoffes oder beim Verstellen des Faltverdecks in die Aufbewahrungslage im Zusammenwirken mit einem unter und/oder über dem Eckspriegel befindlichen Teil des Faltverdecks gegen die Kraft des Federelements in eine günstige, beispielsweise horizontale Winkellage verstellt werden. In dieser Lage kann entweder der Verdeckstoff optimal von dem Eckspriegel gestützt sein oder der Eckspriegel kann eine günstige, beispielsweise horizontale Lage einnehmen, in der das Faltverdeck kompakt zusammengefaltet und eventuell ein unter dem Verdeckkastenboden befindlicher Gepäckraum weniger eingeschränkt ist. Bei der Erfindung liegt der Anschlag des Eckspriegels bei geschlossenem Faltverdeck an dem Gegenanschlag des Verdecklenkers oder Gestängeelements unter einer Vorspannung an. Eine weitere Ausgestaltung sieht vor, dass der in einem Mittelbereich gekrümmte Eckspriegel in Schließlage und in der Aufbewahrungslage des Faltverdecks nach oben konvex gekrümmt ist und in der Aufbewahrungslage des Faltverdecks etwa horizontal angeordnet ist. Beispielsweise in diesem Fall können ein in Schließlage nach oben konvex gekrümmter vorderster Querspriegel des Faltverdecks und der Eckspriegel sowie weitere Teile des Faltverdecks in der Aufbewahrungslage kompakt auf einem beispielsweise höhenverstellbaren Verdeckkastenboden von oben abgelegt werden. In der Hochlage des Verdeckkastenbodens kann der unter dem Verdeckkastenboden befindliche Raum besser beispielsweise zur Ablage von Gepäckstücken genutzt werden.

Ein Ausführungsbeispiel der Erfindung wird anhand einer Zeichnung näher erläutert. Es zeigen
- Fig. 1: einen Querschnitt durch den von einem Verdecklenker schwenkbar gestützten Eckspriegel in der Schließlage des Faltverdecks und
- Fig. 2: eine Figur 1 entsprechende Ansicht bei in die Offenlage geschwenktem Faltverdeck.

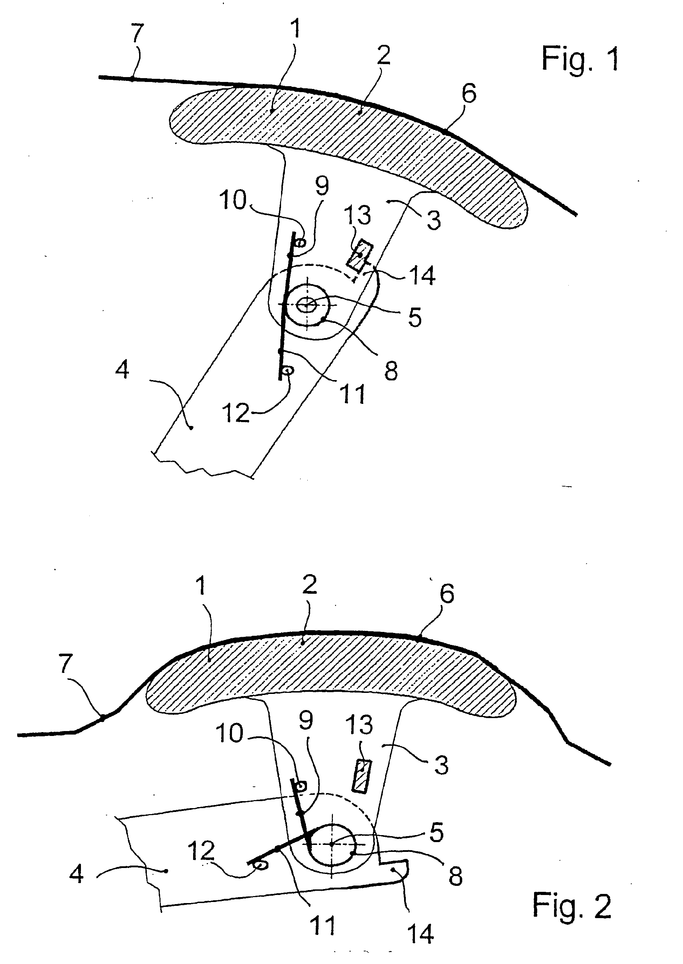

Der in Figur 1 bei geschlossenem Faltverdeck in einem Querschnitt dargestellte Eckspriegel 1 weist einen noch oben konvex gekrümmten Mittelbereich 2 auf, der jeweils seitlich mit nach unten gerichteten Schwenkarmen 3 verbunden ist. Jeweils an dem nach unten vorstehenden Endbereich des Schwenkarmes 3 und an einem zugewandte Ende eines Verdecklenkers 4 ist eine gemeinsame Fahrzeugquerachse 5 gebildet, um die der Eckspriegel 1 schwenkbar ist. Der Eckspriegel 1 weist eine in Fahrzeuglängsrichtung leicht und in Fahrzeugquerrichtung stärker gekrümmte Außenfläche 6 auf, die mit einem Spanngurt 7 beispielsweise durch eine Klebeschicht verbunden ist und in der dargestellten Schließlage des Faltverdecks schräg nach hinten unten verläuft. Der Spanngurt 7 erstreckt sich bei geschlossenem Faltverdeck seitlich von einem nicht dargestellten vordersten Querspriegel nach hinten zu einem U-förmigen Spannbügel, der mit nach vorne gerichteten Schenkeln unterhalb einer Heckscheibe angeordnet und um eine an seinen vorderen Schenkelenden ausgebildete Schwenkachse nach oben oder zurück in eine etwa horizontale Fahrstellung schwenkbar ist. In der dargestellten Schließlage des Faltverdecks ist ein um die Fahrzeugquerachse 5 abgestütztes Federelement 8 vorgespannt und belastet den Eckspriegel 1 im Gegenuhrzeigersinn um die Fahrzeugquerachse 5 zu dem Verdecklenker 4. Hierzu stützt sich ein Schenkel 9 des Federelements 8 an einem Stützbolzen 10 an dem betreffenden Schwenkarm 3 ab. Ein anderer Schenkel 11 des Federelements stützt sich an einem seitlich von dem Verdecklenker 4 abstehenden Stützbolzen 12 ab. In der Schließlage des Faltverdecks nimmt der Eckspriegel 1 die dargestellte Lage ein, in der seine Außenfläche 6 nach außen konvex und nach hinten unten gekrümmt verläuft. Dabei liegt ein an dem Schwenkarm 3 des Eckspriegels 1 ausgebildeter Anschlag 13 unter der Vorspannkraft des Federelements an einem Gegenanschlag 14 des Verdecklenkers 4 an. Beim Schließen des geöffneten Faltverdecks werden durch den zunehmend gespannten Spanngurt 7 der Eckspriegel 1 und der durch die Kraft des Federelements 8 über den Gegenanschlag 14 an dem Anschlag 13 des Eckspriegels 1 anliegende Verdecklenker 4 gemeinsam nach oben in die dargestellte Schließlage des Faltverdecks verstellt, wobei der Verdecklenker 4 um eine untere, in Fahrzeugquerrichtung verlaufende Schwenkachse frei verschwenken kann.

Beim Verstellen des Faltverdecks aus der Schließlage gemäß Figur 1 in die Figur 2 entsprechende Offenlage entspannt sich der Spanngurt 7 und der Verdecklenker 4 sowie der Eckspriegel 1 können nach hinten unten in die Aufbewahrungslage gemäß Figur 2 schwenken. Zuvor wird jedoch eine in einer Hecköffnung des Verdeckstoffes angeordnete Heckscheibe nach vorne unten in eine etwa horizontale Lage geschwenkt und auf einem zwischen einer Tieflage und einer Hochlage höhenverstellbaren Verdeckkastenboden in seiner Hochlage abgelegt. Beim Verstellen des Faltverdecks in die Aufbewahrungslage kommt der in der Figur rechte Bereich des Eckspriegels 1 eventuell unter Zwischenlage des Verdeckstoffes an der Heckscheibe zur Anlage und wird von dieser um einen Winkel von ca. 20 bis 40 Grad im Gegenuhrzeigersinn um die Fahrzeugquerachse 5 nach vorne oben geschwenkt. Gleichzeitig oder danach kommt ein über dem Eckspriegel befindliches Teil des Faltverdecks in dem in den Figuren linken Bereich des Eckspriegels 1 zur Anlage und verschwenkt anschließend den Eckspriegel 1 im Gegenuhrzeigersinn um die Fahrzeugquerachse 5 in die in Figur 2 dargestellte etwa horizontale Lage. In dieser Lage weisen der Anschlag 13 des Eckspriegels 1 und der Gegenanschlag 14 an dem Verdecklenker 4 einen Abstand voneinander auf. In der dargestellten Offenlage des Faltverdecks ist die in Fahrzeuglängsrichtung etwas gekrümmte Außenfläche 6 des Eckspriegels 1 etwa horizontal angeordnet. Der Mittelbereich 2 des Eckspriegels 1 befindet sich in einer nach oben konvex gekrümmten Lage. Dadurch können ein in Schließlage und in der Offenlage des Faltverdecks jeweils nach oben konvex gekrümmter vorderster Querspriegel sowie die weiteren Teile des Faltverdecks kompakt übereinander angeordnet und auf dem nicht dargestellten, zwischen einer Hochlage und einer Tieflage höhenverstellbaren Verdeckkastenboden in seiner Hochlage abgelegt werden. Befindet sich das Faltverdeck in seiner Offenlage, sind auf dem Verdeckkastenboden zunächst die Heckscheibe, dann ein Bereich des Verdeckstoffes, darüber der Eckspriegel, anschließend eine Verdeckstofffalte, darauf eine Hauptsäule und schließlich wenigstens ein Dachelement sowie an oberster Stelle der vorderste Querspriegel angeordnet.

Zur Begrenzung des Schwenkwinkels des Eckspriegels kann der Gegenanschlag auch an einem anderen Gestängeelement des Faltverdecks angebracht sein, das keine Schwenkachse für den Eckspriegel bildet. Es ist auch möglich, dass der Schwenkbereich des Eckspriegels in beide Schwenkrichtungen um die Fahrzeugquerachse von jeweils einem Anschlag bzw. Gegenanschlag begrenzt ist. Die Querschnittsform des Eckspriegels ist an sich beliebig. Gegenüber einem um eine Achse schwenkbaren Eckspriegel, der beim Verstellen von der Offenlage in die Schließlage und umgekehrt etwa um 180 Grad verschwenkt, wird mit der Erfindung ein Höhengewinn erreicht, der sich etwa aus der doppelten Krümmungshöhe des Mittelbereiches des Eckspriegels und der doppelten Höhe der mit dem Mittelbereich verbundenen seitlichen Schwenkarme ergibt, da der erfindungsgemäße Eckspriegel in der Offenlage und in der Schließlage jeweils mit seiner konvex gekrümmten Außenseite noch oben gerichtet angeordnet ist. Das Federelement kann eine beliebige elastische Feder sein. Der Anschlag bzw. Gegenanschlag kann durch einen beliebigen geformten Wandbereich, beispielsweise einen Vorsprung oder eine Vertiefung gebildet sein.

## Patentansprüche

1. Eckspriegel für ein Fahrzeug mit Faltverdeck, der um eine an seitlichen Verdecklenkern (4) gemeinsam ausgebildete Fahrzeugquerachse (5) schwenkbar ist und an dem Verdeckstoff oder an einem mehrere Querbügel und/oder Querspriegel des Faltverdecks verbindenden Spannband (7) befestigt ist, mit einem Anschlag (13) an dem Eckspriegel (1) und einem Gegenanschlag (14) an dem Verdecklenker (4) oder an einem anderen Gestängeelement des Faltverdecks, und einem Federelement (8), das den Eckspriegel (1) um die Fahrzeugquerachse (5) belastet, **dadurch gekennzeichnet, dass** das Federelement (8) den Eckspriegel (1) derart um die Fahrzeugquerachse (5) belastet, dass sich beim Verstellen des geöffneten Faltverdecks in eine den Fahrgastraum überdeckende Schließlage der Anschlag (13) an den Gegenanschlag (14) annähert und in der Schließlage des Faltverdecks an dem Gegenanschlag (14) anliegt.

2. Eckspriegel nach Anspruch 1, **dadurch gekennzeichnet, dass** in der Schließlage des Faltverdecks der Anschlag (13) unter einer Vorspannkraft des Federelements (8) an dem Gegenanschlag (14) anliegt.

3. Eckspriegel nach Anspruch 1 oder 2, **dadurch gekennzeichnet, dass** der Eckspriegel (1) einen in Schließlage des Faltverdecks in Fahrzeugquerrichtung nach außen konvex gekrümmten Mittelbereich (2) aufweist, der seitlich mit nach unten gerichteten Schwenkarmen (3) verbunden ist, die an von dem Mittelbereich (2) entfernten Schwenkarmbereichen die Fahrzeugquerachse (5) bilden.

4. Eckspriegel nach einem der Ansprüche 1 bis 3, **dadurch gekennzeichnet, dass** der Mittelbereich (2) des Eckspriegels (1) eine Außenfläche (6) aufweist, die in Schließlage des Faltverdecks in Fahrzeuglängsrichtung nach oben konvex gekrümmt verläuft.

5. Eckspriegel nach einem der Ansprüche 1 bis 4, **dadurch gekennzeichnet, dass** der Mittelbereich (2) des Eckspriegels (1) eine Außenfläche (6) aufweist, die in der Offenlage des Faltverdecks etwa horizontal angeordnet ist.

6. Eckspriegel nach Anspruch 5, **dadurch gekennzeichnet, dass** der Mittelbereich (2) des Eckspriegels (1) in der Offenlage des Faltverdecks nach oben konvex gekrümmt ist.

7. Eckspriegel nach einem der Ansprüche 1 bis 6, **dadurch gekennzeichnet, dass** das Verdeckgestänge des Faltverdecks einen vordersten Querspriegel aufweist, der in der Schließlage und in der Offenlage des Faltverdecks nach oben konvex gekrümmt angeordnet ist.

8. Eckspriegel nach einem der Ansprüche 1 bis 7, **dadurch gekennzeichnet, dass** das Verdeckgestänge einen vordersten Querspriegel derart kinematisch führt, dass in der Offenlage eine in einer Hecköffnung des Verdeckstoffes angeordnete Heckscheibe auf einem zwischen einer Tieflage und einer Hochlage verstellbaren Verdeckkastenboden in seiner Hochlage von oben aufliegt, darüber mittelbar oder unmittelbar der Eckspriegel (1) angeordnet ist und sich darüber mittelbar oder unmittelbar der vorderste Querspriegel befindet.

9. Eckspriegel nach einem der Ansprüche 1 bis 8, **dadurch gekennzeichnet, dass** der Eckspriegel (1) beim Verstellen des Faltverdecks in die Aufbewahrungslage mit wenigstens einem unter dem Eckspriegel (1) befindlichen Teil (Heckscheibe) zusammenwirkend und/oder mit wenigstens einem über dem Eckspriegel (1) befindlichen Teil des Faltverdecks zusammenwirkend in eine etwa horizontale Lage schwenkt.

## Claims

1. A corner hoop for a vehicle with a folding rooftop, pivotable around a transverse axis (5) of the vehicle formed jointly on lateral convertible-roof control arms (4), and adapted to be fastened to the roof material or to a tension strap connecting a number of transverse members and/or transverse hoops of the folding roof, comprising a stop (13) on the corner roof (1) and a counter-stop (14) on the control arm (4) or on another linkage element of the roof, and a spring element (8) which biases the corner hoop (1) around the transverse axis (5) of the vehicle, **characterised in that** the spring element (8) biases the corner hoop (1) around the axis (5) so that when the opened roof is moved into a closed position covering the passenger compartment the stop (13) approaches the counter-stop (14) and abuts the counter-stop (14) when the folding roof is in the closed position.

2. A corner hoop according to claim 1, **characterised in that** when the folding roof is in the closed position the stop (13) abuts the counter-stop (14) under the prestressing force of the spring element (8).

3. A corner hoop according to claim 1 or claim 2, **characterised in that** the corner hoop (1) has a curved middle region (2) which is convex towards the outside in the transverse direction of the vehicle when the folding roof is in the closed position, the middle region being connected at the sides to downwardly pointing swivel arms (3) which form the transverse axis (5) on swivel-arm regions remote from the middle region (2).

4. A corner hoop according to any of claims 1 to 3, **characterised in that** the middle region (2) of the corner hoop (1) has an outer surface (6) which is curved and upwardly convex in the longitudinal direction of the vehicle when the folding roof is in the closed position.

5. A corner hoop according to any of claims 1 to 4, **characterised in that** the middle region (2) of the corner hoop (1) has an outer surface (6) which is approximately horizontal when the folding roof is in the open position.

6. A corner hoop according to claim 5, **characterised in that** the middle region (2) of the corner hoop (1) is curved and upwardly convex when the folding roof is in the open position.

7. A corner hoop according to any of claims 1 to 6, **characterised in that** the folding-roof linkage at the front has a transverse hoop which is curved and upwardly convex in the closed position and in the open position of the folding roof.

8. A corner hoop according to any of claims 1 to 7, **characterised in that** the linkage mechanically guides a front transverse hoop so that in the open position a rear window situated in a rear opening in the roof material is supported from above in its high position on a roof-box bottom adjustable between a low position and a high position, the corner hoop (1) is disposed directly or indirectly above, and the front transverse hoop is directly or indirectly above.

9. A corner hoop according to any of claims 1 to 8, **characterised in that** when the folding roof is moved into the storage position the corner hoop (1) swings into an approximately horizontal position in co-operation with at least one part (rear window) under the corner hoop (1) and/or with at least one part of the folding roof above the corner hoop (1).

## Revendications

1. Arceau de coin pour un véhicule muni d'une capote, logé en pivotement autour d'un axe transversal de véhicule (5) formé sur des guides de capote latéraux (4), et fixé au tissu de capote ou à une bande de serrage (7) reliant plusieurs étriers transversaux et/ou arceaux transversaux de la capote, l'arceau de coin (1) comportant une butée (13) et le guide de capote (4) ou un autre élément de tringlerie comportant une contre-butée (14), et un élément ressort (8) qui charge l'arceau de coin (1) autour de l'axe transversal de véhicule (5),
**caractérisé en ce que**
l'élément ressort (8) charge l'arceau de coin (1) autour de l'axe transversal de véhicule (5), de sorte que lors du déplacement de la capote ouverte dans une position de fermeture recouvrant l'habitacle, la butée (13) s'approche de la contre-butée (14) et s'applique contre la contre-butée (14) dans la position de fermeture de la capote.

2. Arceau de coin selon la revendication 1,
**caractérisé en ce que**
dans la position de fermeture de la capote la butée (13) s'applique contre la contre-butée (14) sous une force de précontrainte de l'élément ressort (8).

3. Arceau de coin selon la revendication 1 ou 2,
**caractérisé en ce que**
l'arceau de coin (1) présente une zone centrale (2) courbée de manière convexe vers l'extérieur dans la direction transversale de véhicule lorsque la capote est en position de fermeture, elle est reliée latéralement à des bras pivotants (3) dirigés vers le bas, formant l'axe transversal du véhicule (5) au niveau des zones de bras pivotant éloignées de la zone centrale (2).

4. Arceau de coin selon l'une quelconque des revendications 1 à 3,
**caractérisé en ce que**
la zone centrale (2) de l'arceau de coin (1) présente une surface extérieure (6) qui, en position de fermeture de la capote, s'étend dans la direction longitudinale du véhicule de manière convexe vers le haut.

5. Arceau de coin selon l'une quelconque des revendications 1 à 4,
**caractérisé en ce que**
la zone centrale (2) de l'arceau de coin (1) présente une surface extérieure (6) qui, en position d'ouverture de la capote, est disposée à peu près horizontalement.

6. Arceau de coin selon la revendication 5,
**caractérisé en ce qu'**
en position d'ouverture de la capote la zone centrale (2) de l'arceau de coin (1) est convexe vers le haut.

7. Arceau de coin selon l'une quelconque des revendications 1 à 6,
**caractérisé en ce que**
la tringlerie de capote présente un arceau transversal avant qui, dans la position de fermeture et dans la position d'ouverture de la capote, est convexe vers le haut.

8. Arceau de coin selon l'une quelconque des revendications 1 à 7,
**caractérisé en ce que**
la tringlerie de capote guide cinématiquement un arceau transversal avant, de sorte qu'en position d'ouverture une lunette arrière disposée dans une ouverture arrière du tissu de capote repose par le haut sur le fond de caisson de capote réglable entre une position basse et une position haute lorsque celui-ci se trouve dans sa position haute, l'arceau de coin (1) est disposé indirectement ou directement au-dessus, et l'arceau transversal avant se trouve indirectement ou directement au-dessus.

9. Arceau de coin selon l'une quelconque des revendications 1 à 8,
**caractérisé en ce que**
lors du déplacement de la capote dans la position de rangement l'arceau de coin (1) pivote dans une position sensiblement horizontale en coopérant avec au moins un élément (lunette arrière) situé en dessous de l'arceau de coin et/ou avec au moins un élément de la capote situé au-dessus de l'arceau de coin (1).
